# EUROPEAN PATENT APPLICATION

(11) **EP 4 848 641 A1**
(43) Date of publication of application: **02.12.2026**
(21) Application number: 25745332.4
(22) Date of filing: 22.01.2025
(51) Int. Cl.: H04L 5/00, H04W 72/0453

(54) **METHOD AND APPARATUS FOR TRANSMITTING AND RECEIVING PTRS**

(30) Priority: 22.01.2024 KR 20240009563
(71) Applicant: LG Electronics Inc., Yeongdeungpo-gu Seoul 07336 (KR)
(72) Inventor: JEONG, Chanho, Seoul 06772 (KR); KANG, Jiwon, Seoul 06772 (KR); KIM, Hyungtae, Seoul 06772 (KR)
(74) Representative: Plasseraud IP
(86) International application number: PCT/KR2025/001254
(87) International publication number: WO 2025/159507

(57) **Abstract**

A method according to an embodiment of the present disclosure comprises receiving, from a base station, an uplink configuration related to a phase tracking reference signal (PTRS), receiving, from the base station, downlink control information (DCI) for scheduling a physical uplink shared channel (PUSCH), transmitting, to the base station, the PTRS based on symbols allocated to the PUSCH. The PTRS is mapped to resource elements (REs) within the symbols based on two code division multiplexing (CDM) groups related to configuration type 1. The resource elements are related to three PTRS ports. Resource elements related to two PTRS ports associated with a DoModulation Reference Signal (DMRS) port in the same CDM group among the resource elements are based on i) different resource element offsets and/or ii) different resource blocks.

## Description

### [TECHNICAL FIELD]

The present disclosure relates to a method and device for transmitting and receiving a reference signal.

### [BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

For 3 Tx uplink transmission introduced in Rel-19, it is advantageous to estimate a phase noise using 3 PTRS ports based on a UE implementation method (e.g., UE with 3 panels) in terms of performance. In this case, a method to support 3 PTRS ports is required.

### [DISCLOSURE]

### [TECHNICAL PROBLEM]

According to an existing method (e.g., PTRS mapping operation based on DMRS configuration type 1), two PTRS ports are mapped to different REs (with different subcarrier locations) based on two CDM groups. However, when three PTRS ports are mapped based on the DMRS configuration type 1, a problem may arise where the REs mapped to two PTRS ports overlap in a frequency domain. The problem is described in detail below.

When two PTRS ports are associated with different DMRS ports in the same CDM group, an offset value for determining a subcarrier location of the RE mapped to the PTRS is different for each of the two PTRS ports. Therefore, different PTRS ports are mapped to different REs.

However, according to the existing method, a DMRS port with the lowest index in the CDM group is defined to be associated with a PTRS port. When three PTRS ports are mapped to REs based on the DMRS configuration type 1, two PTRS ports (e.g., PTRS port 0, PTRS port 2) may be defined/configured to be associated with the same DMRS port (lowest indexed DMRS port) in the same CDM group. In this case, the offset values respectively applied to the two PTRS ports are also equal. In other words, subcarriers of the REs to which the two PTRS ports are mapped are the same. As described above, two of the three PTRS ports may be mapped to the same RE(s) in the frequency domain.

An object of the present disclosure is to provide a method of resolving a problem in that REs related to different PTRS ports overlap in a frequency domain when supporting three PTRS ports.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method according to an embodiment of the present disclosure comprises receiving, from a base station, an uplink configuration related to a phase tracking reference signal (PTRS), receiving, from the base station, downlink control information (DCI) for scheduling a physical uplink shared channel (PUSCH), transmitting, to the base station, the PTRS based on symbols allocated to the PUSCH.

The PTRS is mapped to resource elements (REs) within the symbols based on two code division multiplexing (CDM) groups related to configuration type 1.

The resource elements are related to three PTRS ports.

Resource elements related to two PTRS ports associated with a DoModulation Reference Signal (DMRS) port in the same CDM group among the resource elements are based on i) different resource element offsets and/or ii) different resource blocks.

The different resource element offsets may include i) a first resource element offset and ii) a second resource element offset.

The first resource element offset may be a value determined based on a first offset among offsets defined for the configuration type 1. The first offset may be i) an offset configured based on the configuration information or ii) a first offset among the offsets.

The second resource element offset may be a value determined based on a second offset. The second offset may be one of remaining offsets excluding the first offset from the offsets.

The second offset may be a next offset of the first offset among the offsets.

The different resource blocks may include i) a first resource block and ii) a second resource block. The first resource block may be determined based on a frequency density related to the PTRS. The second resource block may be a next resource block of the first resource block.

The different resource blocks may include resource blocks respectively related to the three PTRS ports.

The different resource blocks may include i) a first resource block related to a first PTRS port, ii) a second resource block related to a second PTRS port, and iii) a third resource block related to a third PTRS port.

The first resource block may be determined based on a frequency density related to the PTRS. The second resource block may be a next resource block of the first resource block. The third resource block may be a next resource block of the second resource block.

A DMRS port associated with each PTRS port may be defined. A number of bits in a PTRS-DMRS association field within the DCI may be 0.

The PUSCH may be related to codebook based uplink (UL) transmission based on three antenna ports.

A user equipment according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

A device according to another embodiment of the present disclosure includes one or more memories and one or more processors operably connected to the one or more memories. The one or more memories store instructions based on being executed by the one or more processors, and the instructions allow the device to perform all steps according to any one of the methods.

A non-transitory computer readable medium according to another embodiment of the present disclosure stores instructions. The instructions executable by one or more processors allow a user equipment to perform all steps of any one of the methods.

A method according to another embodiment of the present disclosure comprises transmitting, to a user equipment (UE), an uplink configuration related to a phase tracking reference signal (PTRS); transmitting, to the UE, downlink control information (DCI) for scheduling a physical uplink shared channel (PUSCH); and receiving, from the UE, the PTRS based on symbols allocated to the PUSCH.

The PTRS is mapped to resource elements (REs) within the symbols based on two code division multiplexing (CDM) groups related to configuration type 1.

The resource elements are related to three PTRS ports.

Resource elements related to two PTRS ports associated with a DoModulation Reference Signal (DMRS) port in the same CDM group among the resource elements are based on i) different resource element offsets and/or ii) different resource blocks.

A base station according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

### [ADVANTAGEOUS EFFECTS]

According to embodiments of the present disclosure, when three PTRS ports are mapped to RE(s) based on configuration type 1, different PTRS ports can be prevented from being mapped to the same RE. Additionally, since phase noise can be estimated for each of the three PTRS ports, phase noise estimation performance required due to non-coherent UL transmission can be improved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [DESCRIPTION OF THE DRAWINGS]

FIG. 1 illustrates an example of uplink transmission and reception operation.
FIG. 2 illustrates mapping of PTRS ports per DMRS type according to an existing method.
FIG. 3 illustrates mapping of PTRS ports according to an embodiment of the present disclosure.
FIG. 4 illustrates an RB location mapped to PTRS port according to an existing method.
FIG. 5 illustrates an example of an RB location for PTRS port according to an embodiment of the present disclosure.
FIG. 6 illustrates another example of an RB location for PTRS port according to an embodiment of the present disclosure.
FIG. 7 is a flow chart illustrating a method according to an embodiment of the present disclosure.
FIG. 8 is a flow chart illustrating a method according to another embodiment of the present disclosure.
FIG. 9 illustrates configuration of a first device and a second device according to an embodiment of the present disclosure.

### [DETAILED DESCRIPTION]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### DeModulation Reference Signal (DMRS)

### DMRS reception procedure

A DMRS-related operation for PDSCH reception will be described.

When receiving PDSCH scheduled by DCI format 1_0 or receiving PDSCH before dedicated higher layer configuration of any of the parameters dmrs-AdditionalPosition, maxLength, and dmrs-Type, the UE assumes that the PDSCH is not present in any symbol carrying DM-RS except for PDSCH with allocation duration of 2 symbols with PDSCH mapping type B, and a single symbol front-loaded DM-RS of configuration type 1 on DM-RS port 1000 is transmitted, and that all the remaining orthogonal antenna ports are not associated with transmission of PDSCH to another UE.

In addition, for PDSCH with mapping type A, the UE assumes that dmrs-AdditionalPosition = 'pos2' and up to two additional single-symbol DM-RS are present in a slot according to the PDSCH duration indicated in the DCI. For PDSCH with allocation duration of 7 symbols for normal CP or 6 symbols for extended CP with mapping type B, the UE assumes that one additional single-symbol DM-RS is present in the 5th or 6th symbol when the front-loaded DM-RS symbol is in the 1st or 2nd symbol respectively of the PDSCH allocation duration. Otherwise, the UE assumes that the additional DM-RS symbol is not present. And, for PDSCH with allocation duration of 4 symbols with mapping type B, the UE assumes that no additional DM-RS are present. For PDSCH with allocation duration of 2 symbols with mapping type B, the UE assumes that no additional DM-RS are present, and the UE assumes that the PDSCH is present in the symbol carrying DM-RS.

When receiving the PDSCH scheduled by DCI format 1_1 by a PDCCH having CRC scrambled by C-RNTI, MCS-C-RNTI, or configured scheduling (CS)-RNTI,
- The UE may be configured as a higher layer parameter drms_Type and the configured DMRS configuration type is used for receiving the PDSCH.
- The UE may be configured as a maximum number of front-loaded DMRS symbols for the PDSCH by the higher layer parameter maxLength given by DMRS-DownlinkConfig.

In the UE, the number of DMRS ports may be scheduled by an antenna port index of DCI format 1_1.

The DMRS configuration type is configured by the dmrs-Type parameter in DMRS-DownlinkConfig IE of Table 1. DMRS configuration type 1 has a higher RS density in a frequency domain and supports up to 4(8) ports for single (double)-symbol DMRS. In addition, DMRS configuration type 1 supports length-2 F-CDM and FDM for the single-symbol DMRS and supports length-2 F/T-CDM and FDM for the double-symbol DMRS. DMRS configuration type 2 has more DMRS antenna ports and supports up to 6(12) ports for the single (double)-symbol DMRS.

Table 1 below shows an example of DMRS-DownlinkConfig IE used to configure downlink DMRS for PDSCH.

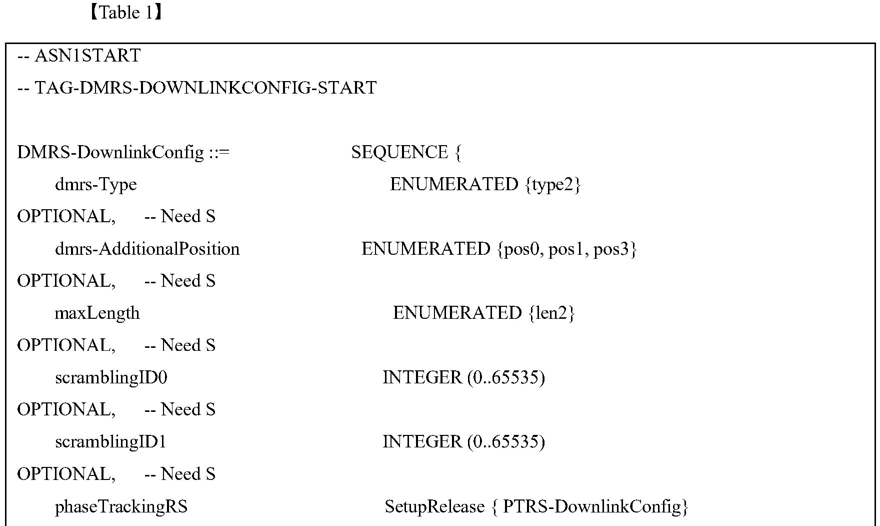

In Table 1, parameter dmrs-AdditionalPosition represents a location for additional DM-RS in DL and when there is no corresponding parameter, the UE applies a pos2 value. Parameter Dmrs-Type represents selection of the DMRS type to be used for DL and when there is no corresponding parameter, the UE uses DMRS type 1. Parameter Max-Length represents the maximum number of OFDM symbols for DL front loaded DMRS, and len1 corresponds to a value of 1. Parameter PhaseTrackingRS configures DL PTRS and when the corresponding parameter does not exist or is cancelled, the UE assumes that there is no DL PTRS.

For DM-RS configuration type 1,
- when is scheduled with one codeword and antenna port mapping is allocated with indices of {2, 9, 10, 11, or 30} or the UE is scheduled with two codewords,
the UE may assume that all remaining orthogonal antenna ports are not related to transmission of the PDSCH to another UE.

For DM-RS configuration type 2,
- when is scheduled with one codeword and the antenna port mapping is allocated with indices of {2, 10, 23} or the UE is scheduled with two codewords,
the UE may assume that all remaining orthogonal antenna ports are not related to transmission of the PDSCH to another UE.

An example of a DL DMRS procedure is described below.

A base station transmits DMRS configuration information to a UE.

The DMRS configuration information may refer to DMRS-DownlinkConfig IE. The DMRS-DownlinkConfig IE may include parameter dmrs-Type, parameter dmrs-AdditionalPosition, parameter maxLength, parameter phaseTrackingRS, etc.

The parameter dmrs-Type is a parameter for selection of a DMRS configuration type to be used for DL. In NR, the DMRS may be classified into two configuration types: (1) DMRS configuration type 1 and (2) DMRS configuration type 2. The DMRS configuration type 1 is a type having a higher RS density in the frequency domain, and the DMRS configuration type 2 is a type having more DMRS antenna ports.

The parameter dmrs-AdditionalPosition is a parameter indicating the position of an additional DMRS in the DL. If the corresponding parameter is not present, the UE applies value of pos2. In the DMRS, a first position of a front-loaded DMRS may be determined according to the PDSCH mapping type (type A or type B), and an additional DMRS may be configured to support a high speed UE. The front-loaded DMRS occupies 1 or 2 consecutive OFDM symbols and is indicated by RRC signaling and downlink control information (DCI).

The parameter maxLength is a parameter indicating the maximum number of OFDM symbols for DL front-loaded DMRS. The parameter phaseTrackingRS is a parameter for configuring DL PTRS. If the corresponding parameter is not present or has been canceled, the UE assumes that there is no DL PTRS.

The base station generates a sequence used for DMRS.

The sequence for DMRS is generated according to Equation 1 below. [Equation 1] $r \left(n\right) = \frac{1}{\sqrt{2}} \left(1-2⋅c\left(2n\right)\right) + j \frac{1}{\sqrt{2}} \left(1-2⋅c\left(2n+1\right)\right)$

The pseudo-random sequence *c(i)* is defined by 3GPP TS 38.211 5.2.1. That is, *c(i)* may be a length-31 gold sequence using two m-sequences. A pseudo-random sequence generator is initialized by Equation 2 below. [Equation 2] ${c}_{init} = \left({2}^{17}\left({N}_{symb}^{slot}{n}_{s , f}^{μ}+l+1\right)\left(2{N}_{ID}^{{n}_{SCID}}+1\right)+2{N}_{ID}^{{n}_{SCID}}+{n}_{SCID}\right) mod {2}^{31}$
where *l* is the OFDM symbol number within the slot, and ${n}_{s , f}^{μ}$ is the slot number within a frame.${N}_{ID}^{0} , {N}_{ID}^{1} ∈ \left\{0,1,…,65535\right\}$ are given by the higher-layer parameter *scramblingID0* and *scramblingID1,* respectively, in the *DMRS-DownlinkConfig* IE if provided and the PDSCH is scheduled by PDCCH using DCI format 1_1 with the CRC scrambled by C-RNTI, MCS-C-RNTI, or CS-RNTI.
- ${N}_{ID}^{0} ∈ \left\{0,1,…,65535\right\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI.
- ${N}_{ID}^{{n}_{SCID}} = {N}_{ID}^{cell}$, otherwise, the quantity n_{SCID} ∈ {0, 1} is given by the DMRS sequence initialization field in the DCI associated with the PDSCH transmission if DCI format 1_1 is used.

The base station maps the generated sequence to a resource element. Here, the resource element may mean including at least one of time, frequency, antenna port, or code.

The base station transmits the DMRS to the UE on the resource element, in S 140. The UE receives the PDSCH using the received DMRS.

### UE DMRS transmission procedure

A DMRS related operation for receiving the PUSCH will be described. As described above, UL means signal transmission (or communication) from the UE to the BS. The UL DMRS related operation is similar to the DL DMRS related operation described above, and names of the parameters related to DL may be replaced with the names of parameters related to UL.

That is, DMRS-DownlinkConfig IE may be replaced with DMRS-UplinkConfig IE, the PDSCH mapping type may be replaced with a PUSCH mapping type, and the PDSCH may be replaced with the PUSCH. In addition, in the DL DMRS related operation, the BS may be replaced with the UE and the UE may be replaced with the BS. Sequence generation for the UL DMRS may be defined differently according to whether transform decoding being enabled.

More specifically, in respect to the DMRS, when cyclic prefix orthogonal frequency division multiplexing (CP-OFDM) is used (or when transform precoding is not enabled), a PN sequence is used and when Discrete Fourier Transform-spread-OFDM (DFT-s-OFDM) is used (when the transform precoding is enabled), a ZC sequence having a length of 30 or more is used.

Table 2 below is a table showing one example of DMRS-UplinkConfig IE used for configuring uplink DMRS for the PUSCH.

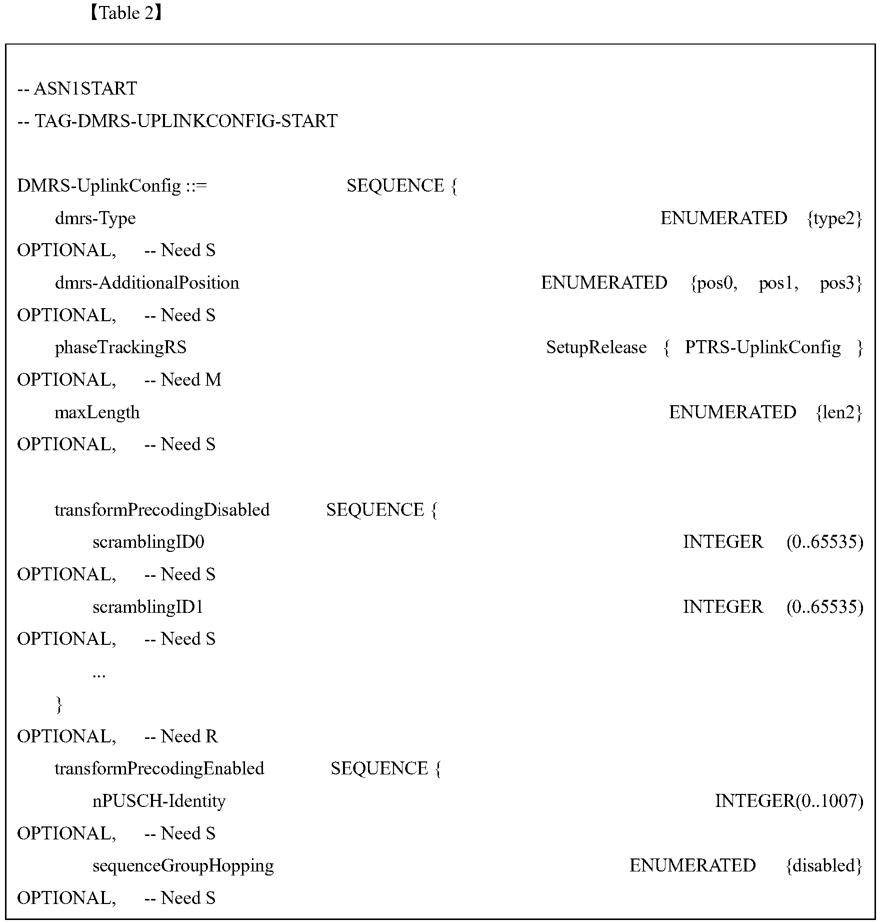

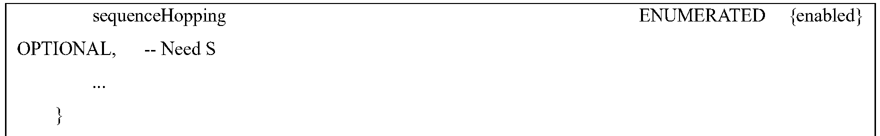

In Table 2, parameter dmrs-AdditionalPosition represents a location for additional DM-RS in UL and when there is no corresponding parameter, the UE applies a pos2 value. Parameter Dmrs-Type represents selection of the DMRS type to be used for UL and when there is no corresponding parameter, the UE uses DMRS type 1.

Parameter Max-Length represents the maximum number of OFDM symbols for UL front loaded DMRS, and len1 corresponds to a value of 1. Parameter PhaseTrackingRS configures UL PTRS. Parameter transformPrecodingdisabled indicates a DMRS-related parameter for Cyclic Prefix OFDM. Parameter transformPrecodingEnabled indicates DMRS-related parameters for DFT-s-OFDM (Transform Precoding).

The UE DM-RS transmission procedure is described in detail below.

When the transmitted PUSCH is neither scheduled by DCI format 0_1 with CRC scrambled by C-RNTI, CS-RNTI, or MCS-C-RNTI nor corresponds to a configured grant, the UE uses a single symbol front-loaded DM-RS of configuration type 1 on DM-RS port 0, and the remaining REs that are not used for DM-RS in the symbols are not used for any PUSCH transmission except for a PUSCH with an allocated duration of 2 or less OFDM symbols with disabled transform precoding. Additional DM-RS may be transmitted according to a scheduling type and PUSCH duration by considering whether frequency hopping is enabled.

When the frequency hopping is disabled: The UE assumes that dmrs-AdditionalPosition is equal to 'pos2', and up to 2 additional DM-RSs may be transmitted according to the PUSCH duration.

When the frequency hopping is enabled, the UE assumes that dmrs-AdditionalPosition is equal to 'pos1', and up to 1 additional DM-RSs may be transmitted according to the PUSCH duration.

When the transmitted PUSCH is scheduled by activation DCI format 0_0 with CRC scrambled by CS-RNTI, the UE uses a single symbol front-loaded DM-RS of a configuration type provided by a higher-layer parameter dmrs-Type of configuredGrantConfig on DM-RS port 0, and the remaining REs that are not used for DM-RS in the symbols are not used for any PUSCH transmission except for a PUSCH with an allocated duration of two or less OFDM symbols with disabled transform precoding, and an additional DM-RS having dmrs-AdditionalPosition from configuredGrantConfig may be transmitted based on the scheduling type and the PUSCH duration considering whether the frequency hopping is enabled.

When the transmitted PUSCH is scheduled by DCI format 0_1 having CRC scrambled by C-RNTI, CS-RNTI, or MCS-RNTI or corresponds to the configured grant,
- The UE may be configured as the higher layer parameter dmrs-Type in DMRS-UplinkConfig and the configured DM-RS configuration type is used for transmitting the PDSCH.
- The UE may be configured as a maximum number of front-loaded DMRS symbols for the PUSCH by the higher layer parameter maxLength in DMRS-UplinkConfig.

When the UE transmitting the PUSCH is configured as higher layer parameter phaseTrackingRS in DMRS-UplinkConfig, the UE may assume that the configurations do not simultaneously occur for the transmitted PUSCH.
- Each random DM-RS port of 4-7 or 6-11 is scheduled by the UE for DM-RS configuration type 1 and type 2 and the PT-RS is transmitted from the UE.

For the PUSCH scheduled by DCI format 0_1, by activation DCI format 0_1 having the CRC scrambled by the CS-RNTI or by configured grant type 1 configuration, the UE assumes that a DM-RS CDM group is not used for data transmission.

### Phase Tracking Reference Signal (PTRS)

In the 5G NR standard, Phase-tracking reference signal (PTRS) was introduced to compensate for impairment caused by phase noise in A high-frequency band. The phase noise causes common phase error (CPE) and inter-carrier interference (ICI) in the frequency domain.

Hereinafter, the DL PTRS and UL PTRS related operations will be described in detail.

### DL PTRS related operation

An example of a DL PTRS procedure is described in detail below.

A base station transmits PTRS configuration information to a UE. The PTRS configuration information may refer to PTRS-DownlinkConfig IE. The PTRS-DownlinkConfig IE may include frequencyDensity parameter, timeDensity parameter, epre-Ratio parameter, resourceElementOffset parameter, etc.

The frequencyDensity parameter is a parameter representing a presence and a frequency density of a DL PTRS as a function of scheduled BW. The timeDensity parameter is a parameter representing the presence and a time density of the DL PTRS as a function of modulation and coding scheme (MCS). The epre-Ratio parameter is a parameter representing an energy per resource element (EPRE) between a PTRS and a PDSCH.

The base station generates a sequence used for the PTRS. As shown in Equation 3 below, the sequence for the PTRS is generated using a DMRS sequence of the same subcarrier. The sequence generation for the PTRS may be differently defined depending on whether transform precoding has been enabled, and Equation 3 below represents an example where the transform precoding is disabled. [Equation 3] ${r}_{k} = r \left(2m+k′\right)$

Here, *r*(2*m* + *k*') is a DMRS given in a location *l*₀ and a subcarrier *k*.

That is, the sequence of the PTRS uses a sequence of the DMRS, and more specifically, the sequence of the PTRS in the subcarrier k is the same as a sequence of the DMRS in the subcarrier k.

The base station maps the generated sequence to a resource element. Here, the resource element may mean including at least one of time, frequency, antenna port or code.

A location of the PTRS in the time domain starts from a starting symbol of PDSCH allocation and is mapped at a specific symbol spacing. If a DMRS symbol is present, the mapping is performed from a symbol next to the DMRS symbol. The specific symbol spacing may be 1, 2 or 4 symbols.

A frequency location of the PTRS in relation to resource element mapping of the PTRS is determined by a frequency location of an associated DMRS port and higher layer parameter UL-PTRS-RE-offset. Here, UL-PTRS-RE-offset is included in PTRS configuration and indicates a subcarrier offset for UL PTRS for CP-OFDM.

For DL, the PTRS port is related to a DMRS port of a lowest index among scheduled DMRS ports. And, for UL, the base station configures which DMRS port is related to the PTRS port via UL DCI.

The base station transmits the PTRS to the UE on a resource element.

### UL PTRS related operation

An UL PTRS related operation is similar to the DL PTRS related operation mentioned above, and the names of the parameters related to the DL PTRS may be replaced by the names of the parameters related to the UL PTRS. That is, PTRS-DownlinkConfig IE may be replaced by PTRS-UplinkConfig IE, and in the DL PTRS related operation, the base station may be replaced by the UE and the UE may be replaced by the base station. In the same manner, the sequence generation for the PTRS may be differently defined depending on whether transform precoding has been enabled.

### Downlink transmission and reception operations

The eNB may schedule downlink transmission such as the frequency/time resource, the transport layer, a downlink precoder, the MCS, etc. Specifically, the eNB may determine a beam for PDSCH transmission to the UE.

In addition, the UE may receive Downlink Control Information (DCI) for downlink scheduling (i.e., including scheduling information of the PDSCH) on the PDCCH (S702). DCI format 1_0 or DCI format 1_1 may be used for the downlink scheduling and specifically, DCI format 1_1 may include information such as the following examples: Identifier for DCI formats, Bandwidth part indicator, Frequency domain resource assignment, Time domain resource assignment, PRB bundling size indicator, Rate matching indicator, ZP CSI-RS trigger, Antenna port(s), Transmission configuration indication (TCI), SRS request, and Demodulation Reference Signal (DMRS) sequence initialization.

In particular, according to each state/index indicated in an antenna port(s) field, the number of DMRS ports may be scheduled, and single-user (SU)/multi-user (MU) transmission scheduling is also available. Specifically, the order of DMRS ports corresponding to the number of CWs may be predefined depending on dmrs-type and maxLength, and the number and/or order of DMRS ports may be indicated via an antenna port field of DCI.

In addition, the TCI field consists of 3 bits, and the QCL for the DMRS may be dynamically indicated by indicating a maximum of 8 TCI states according to the TCI field value. The UE may receive downlink data from the base station on the PDSCH. When the UE detects a PDCCH including DCI format 1_0 or 1_1, the UE may decode the PDSCH according to an indication by the corresponding DCI.

Here, when the UE receives a PDSCH scheduled by DCI format 1_1, a DMRS configuration type may be configured by higher layer parameter "dmrs-Type" in the UE and the DMRS configuration type is used for receiving the PDSCH. Further, in the UE, the maximum number of front-loaded DMRS symbols for the PDSCH may be configured by higher layer parameter "maxLength."

In the case of DMRS configuration type 1, when a single codeword is scheduled and an antenna port mapped to an index of {2, 9, 10, 11, or 30} is designated in the UE or when two codewords are scheduled in the UE, the UE assumes that all remaining orthogonal antenna ports are not associated with PDSCH transmission to another UE. Alternatively, in the case of DMRS configuration type 2, when a single codeword is scheduled and an antenna port mapped to an index of {2, 10, or 23} is designated in the UE or when two codewords are scheduled in the UE, the UE assumes that all remaining orthogonal antenna ports are not related to PDSCH transmission to another UE.

### Uplink transmission/reception operation

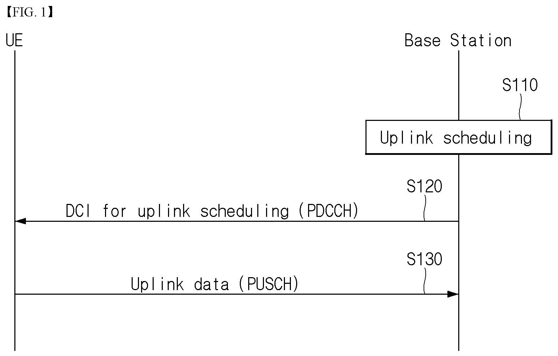

FIG. 1 illustrates an example of an uplink transmission and reception operation.

Referring to the FIG. 1, the eNB may schedule uplink transmission such as the frequency/time resource, the transport layer, an uplink precoder, the MCS, etc., (S110). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S120). DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S130). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

### Simultaneous Transmission across Multi-panels (STxMP) related description

In R18, a method in which the UE simultaneously multiple channels/RSs of the same type or a method in which the same UE simultaneously transmits multiple channels/RSs of different types is discussed. In the case of an existing UE, an operation of transmitting multiple channels/RSs at one time is restricted (e.g., it is possible to simultaneously transmit multiple SRS resources of different SRS sets for UL beam measurement, but it is impossible to simultaneously transmit multiple PUSCHs), but an advanced UE in the future will be able to ease these restrictions and simultaneously transmit multiple channels or RSs using multiple transmission panels, and the UE is called STxMP UE. For example, two PUSCHs corresponding to two UL TBs are scheduled on the same RE, and Spatial relation RS 1 and PC parameter Set 1 (i.e., UL TCI state 1) and Spatial relation RS 2 and PC parameter Set 2 (i.e., UL TCI state 2) are configured for PUSCH 1 and 2 transmission, respectively. The UE transmits PUSCH 1 using panel 1 corresponding to UL TCI state 1 and at the same time, transmits PUSCH 2 using panel 2 corresponding to UL TCI state 2.

When the base station schedules the PUSCH through the DCI, the BS may indicate whether to transmit the PUSCH in STxMP, whether to transmit the PUSCH by a single panel, whether to perform MTRP PUSCH repeat transmission, etc. Of course, the UE must have an STxMP capability and an STxMP mode must be enabled in advance through RRC signaling, etc. For this purpose, an existing SRS resource set indication field may be redefined and used, or a new DCI field may be introduced.

Two methods are considered for R18 STxMP transmission: SFN and SDM methods.

The SFN method is a method in which other panels transmit on the same channel as a channel transmitted on a panel. However, since UL channels of the respective panels are different from each other, transmission is performed using a different precoder, different transmit power, and different transmission beam (i.e., spatial relation RS indicated by UL TCI) for each panel considering the difference.

The SDM method is a method in which transmission is possible from rank 2 or higher. In the SDM method, a part of multi-layers is transmitted by panel 1, and remaining layers are transmitted by panel 2. For example, in 2-layer transmission, the panel 1 transmits a 1st layer, and the panel 2 transmits a 2nd layer. Even in this case, since UL channels of the respective panels are different from each other, transmission is performed using a different precoder, different transmit power, and different transmission beam (i.e., spatial relation RS indicated by UL TCI) for each panel considering the difference.

The panel is not a term used in the standard, and other resources/terms corresponding to the panel are used. For example, different panels may be mapped to and used in different SRS resource sets or SRS resources. For example, a first panel may be mapped to SRS resource set 0, and a second panel may be mapped to SRS resource set 1. SRS resources of the SRS resource set 0 may refer to a transmit antenna port of the first panel, and SRS resources of the SRS resource set 1 may refer to a transmit antenna port of the second panel.

### Unified TCI framework related description

In R17, the UL TCI state may also be indicated in addition to the DL DCI state through a DL DCI (e.g., DCI format 1-1 or 1-2), or only the UL TCI state may be indicated without indicating the DL TCI state. As a result, the schemes used in the existing R15/R16 to configure UL beam and power control (PC) are replaced in R17 with the UL TCI state indication method. More specifically, in R17, one UL TCI state may be indicated through the TCI field of DL DCI, and the UL TCI state may be applied to all PUSCHs and all PUCCHs after a predetermined time called beam application time, and may be applied to some or all of the indicated SRS resource sets. In R18, a scheme to indicate multiple UL TCI states (and/or DL TCI states) through the TCI field of DL DCI is under discussion.

### AIML related description

With the technological advancement of artificial intelligence/machine learning (AI/ML), node(s) and UE(s) constituting a wireless communication network are becoming more intelligent/advanced. In particular, due to the intelligence of networks/base stations, it is expected that various network/base station decision parameter values (e.g., transmission/reception power of each BS, transmission power of each UE, precoder/beam of BS/UE, time/frequency resource allocation for each UE, duplex method of each BS, etc.) can be quickly optimized and derived/applied based on various environmental parameters (e.g., distribution/location of base stations, distribution/location/material of buildings/furniture, etc., location/movement direction/speed of UEs, climate information, etc.).

The contents (the DMRS, the PTRS, the UL transmission/reception operation, the MTRP related operation, AI/ML etc.) described above may be applied in combination with methods proposed in the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

In the present disclosure, 'port' and 'antenna port' may be interpreted as the same meaning. For example, PTRS (DMRS) port means PTRS (DMRS) antenna port, and vice versa.

In the present disclosure,' DMRS (or PTRS)' may refer to 'DM-RS (or PT-RS)', and vice versa.

3Tx may be applied for UL PUSCH transmission in NR MIMO Rel 19 or later standards. According to the legacy standard, 1/2/4/8 Tx uplink transmission is supported. To support the 3 Tx uplink transmission introduced in Rel 19 as shown in the WID below, a method for 3-port PTRS configuration is required.

"Specify non-coherent UL codebook to facilitate 3-antenna-port codebook-based transmissions, without enhancement on UL full power transmission and without enhancement on SRS resource
Note: UL full power transmission mode 1 and 2 are not supported."

To support 3 Tx UL, a method and device for 3-port PTRS configuration are proposed as follows.

### Technical issues to be solved

In 3 Tx uplink transmission (for codebook based UL), the coherency of the following three levels may be considered, and the number of PTRS ports required may vary depending on a transmission mode.

Full coherency: If all 3 ports are capable of coherent transmission,
→ 1 port PTRS configuration
   Partial coherency: If only 2 ports are capable of coherent transmission,
→ 1 or 2 port PTRS configuration
   Non-coherency: If no port is capable of coherent transmission,
→ 1 or 2 port PTRS configuration. In addition, since 2-port PTRS may be insufficient for estimating the three phase noises of 3 Tx UL, 3-port PTRS configuration is required. For example, a 3-Tx UE may include three panels, making coherent transmission between the panels difficult. In this case, (even if an increase in PTRS overhead is considered,) estimating independent phase noise for each panel/Tx/DMRS port may be more advantageous for performance.

When 2-port PTRS is configured, a PTRS RE location is determined per DMRS code division multiplexing (CDM) group according to the legacy standard. Therefore, subcarrier (SC) locations of 2 PTRS ports do not automatically overlap. However, if an existing PTRS RE mapping method is used as it is when 3 PTRS ports are configured and the number of DMRS CDM groups is 2 (e.g., DMRS type 1 & FD-OCC length 2/4), a problem may arise where subcarrier locations of the REs overlap.

Considering the problem described above, a method for 3-port PTRS configuration is required to estimate three phase noises when transmitting non-coherency PUSCH to a 3Tx UE.

The existing operation related to PTRS is described in detail below.

If a higher layer parameter 'phaseTrackingRS' is configured, PT-RS is configured to PUSCH scheduled based on DCI format. If the higher layer parameter 'phaseTrackingRS' is not configured, the UE does not transmit the PT-RS.

DMRS type 1 includes a total of 8 ports including port 0 to port 8 for 1 FL symbol. If the maximum number of PTRS ports is set to 1, PTRS-DMRS association may be performed based on a 2-bit table. This example may be applied when 2 codewords are scheduled for the UE. Specifically, among the 1st to 8th scheduled DMRS ports, the PTRS port may be associated with one of 4 DMRS ports belonging to a codeword with higher MCS. One of the 4 DMRS ports may be indicated based on a 2-bit PTRS-DMRS association field of DCI for the codeword with the higher MCS.

When the maximum number of PTRS ports is set to 2, the PTRS-DMRS association may be performed based on a 4-bit table. For example, the MSB 2-bit value of the PTRS-DMRS association field indicates one of 1st to 4th DMRS ports sharing PTRS port 0. The LSB 2-bit value of the PTRS-DMRS association field indicates one of 1st to 4th DMRS ports sharing PTRS port 1.

For NCB PUSCH case, the 1st to 4th DMRS ports which share PTRS port 0 may be identified by PTRS port index=0 configured in an SRS resource indicated by SRI. The 1st to 4th DMRS ports sharing PTRS port 1 may be identified in the same method.

In the case of 1 CW (one codeword) of CB PUSCH case, DMRS ports corresponding to layers using PUSCH antenna ports 1000 and 1002 share PTRS 0, and DMRS ports corresponding to layers using PUSCH antenna ports 1001 and 1003 share PTRS 1. And, in the case of 2 CW (two codewords), DMRS ports corresponding to layers using PUSCH antenna ports 1000, 1001, 1004, and 1005 share the PTRS 0, and DMRS ports corresponding to layers using PUSCH antenna ports 1002, 1003, 1006, and 1007 share the PTRS 1.

The operation according to the legacy standard is as follows.

For non-codebook based UL transmission, the actual number of UL PT-RS port(s) to transmit is determined based on SRI(s) in DCI format 0_1, 0_2 or 0_3 or higher layer parameter sri-ResourceIndicator in rrc-ConfiguredUplinkGrant. When two SRS resource sets are configured in srs-ResourceSetToAddModList or srs-ResourceSetToAddModListDCI-0-2 with higher layer parameter usage in SRS-ResourceSet set to 'noncodebook', the actual number of UL PT-RS port(s) to transmit corresponding to each SRS resource set is determined based on SRI(s) corresponding to the associated SRS resource set or higher layer parameter sri-ResourceIndicator or sri-ResourceIndicator2 corresponding to the associated SRS resource set in rrc-ConfiguredUplinkGrant. A UE is configured with the PT-RS port index for each configured SRS resource by the higher layer parameter ptrs-PortIndex configured by SRS-Config if the UE is configured with the higher layer parameter phaseTrackingRS in DMRS-UplinkConfig. If the PT-RS port index associated with different SRIs are the same, the corresponding UL DM-RS ports are associated to the one UL PT-RS port.

When the higher layer parameter multipanelScheme is set to 'sdmscheme' and two SRS resource sets are configured in srs-ResourceSetToAddModList or srs-ResourceSetToAddModListDCI-0-2 with higher layer parameter usage in SRS-ResourceSet set to 'codebook'/'nonCodebook' and higher layer parameter maxNrofPortsforSDM in PTRS-UplinkConfig set to n2, the actual number of UL PT-RS port(s) to transmit corresponding to SRS resource sets is 2.

When the higher layer parameter multipanelScheme is set to 'SFNscheme' and two SRS resource sets are configured in srs-ResourceSetToAddModList or srs-ResourceSetToAddModListDCI-0-2 with higher layer parameter usage in SRS-ResourceSet set to 'codebook'/'nonCodebook' and the higher layer parameter maxNrofPorts in PTRS-UplinkConfig is set to n2, the actual number of UL PT-RS port(s) to transmit corresponding to each SRS resource set is determined based on 1st TPMI codepoint field for 'codebook' or 1st SRI(s) codepoint field for 'nonCodebook'.

For partial-coherent and non-coherent codebook-based UL transmission, the actual number of UL PT-RS port(s) is determined based on TPMI(s) and/or number of layers which are indicated by 'Precoding information and number of layers' field(s) in DCI format 0_1, 0_2 or 0_3 or configured by higher layer parameter precodingAndNumberOfLayers.
- If the UE is configured with the higher layer parameter maxNrofPorts in PTRS-UplinkConfig set to 'n2', the actual UL PT-RS port(s) and the associated transmission layer(s) are derived from indicated TPMI(s) as:
- PUSCH antenna port 1000 and 1002 in indicated TPMI(s) share PT-RS port 0, and PUSCH antenna port 1001 and 1003 in indicated TPMI(s) share PT-RS port 1.
- UL PT-RS port 0 is associated with the UL layer 'x' of layers which are transmitted with PUSCH antenna port 1000 and PUSCH antenna port 1002 in indicated TPMI(s), and UL PT-RS port 1 is associated with the UL layer 'y' of layers which are transmitted with PUSCH antenna port 1001 and PUSCH antenna port 1003 in indicated TPMI(s), where 'x' and/or 'y' are given by DCI parameter *'PTRS-DMRS association'* as shown in DCI format 0_1, 0_2 and 0_3 described in Clause 7.3.1 of [5, TS38.212].

If a UE is scheduled with two codewords,
- If the UE is configured with the higher layer parameter *maxNrofPorts* in *PTRS-UplinkConfig* set to 'n1', the PT-RS port is associated with the one of DM-RS ports indicated by DCI field *PTRS-DMRS association* for the codeword with the higher MCS. If the MCS indices of the two codewords are the same, the PT-RS antenna port is associated with codeword 0. When a codeword is scheduled to transmit PUSCH for retransmission, the MCS for determining PT-RS association to codeword is obtained from the DCI for the same transport block in the initial transmission.
- If the UE is configured with the higher layer parameter *maxNrofPorts* in *PTRS-UplinkConfig* set to 'n2', each PT-RS port is associated with the one of DM-RS pors indicated by DCI field PTRS-DMRS association. PUSCH antenna port 1000, 1001, 1004 and 1005 share PT-RS port 0, and PUSCH antenna port 1002, 1003, 1006 and 1007 share PT-RS port 1.

A frequency density and a time density of the PTRS are configured/determined based on the higher layer parameter based on a variation in a bandwidth and Modulation and Coding Scheme (MCS). If parameter *timeDensity* is not configured, *L_{PT-RS}* = 1 is assumed, and if parameter *frequencyDensity* is not configured, *K_{PT-RS} =* 2 is assumed. The parameter *timeDensity* and the parameter *frequencyDensity* represent a threshold ptrs-MCSi (i=1, 2, 3) and N_{RB},i (i=0, 1) as shown in Tables 3 and 4 below.

The values of the parameter *timeDensity* and the parameter *frequencyDensity* are configured based on an uplink configuration. Specifically, the parameter *timeDensity* and the parameter *frequencyDensity* are configured by the higher layer parameter *PTRS-UplinkConfig.* Here, if either or both of *L_{PT-RS}* and *K_{PT-RS}* are configured to "PT-RS is not present", the UE is considered to have no PTRS.

Here, if PUSCH of 2 symbols or less is scheduled to be transmitted and *L_{PT-RS}* = 2 or 4 is configured, the UE does not transmit the PTRS. And, if PUSCH of 4 symbols or less is scheduled to be transmitted and *L_{PT-RS} =* 4 is configured, the UE does not transmit the PTRS. If *L_{PT-RS} =* 2 or 4 and a PUSCH that does not fall under the above cases is scheduled, the PTRS is transmitted for every symbol configured to *L_{PT-RS}* starting from a symbol immediately following DMRS. If an additional DMRS is transmitted in the middle, the PTRS is transmitted for every symbol configured to *L_{PT-RS}* starting from a symbol location next to the corresponding additional symbol.

Table 3 below represents the time density of PT-RS as a function of scheduled MCS.

**[Table 3]**

| **Scheduled MCS** | **Time density** (*L_{PT-RS}*) |
|---|---|
| I_{MCS} < ptrs-MCS₁ | PT-RS is not present |
| ptrs-MCS1 ≤ I_{MCS} < ptrs-MCS2 | 4 |
| ptrs-MCS2 ≤ I_{MCS} < ptrs-MCS3 | 2 |
| ptrs-MCS3 ≤ I_{MCS} < ptrs-MCS4 | 1 |

Table 4 below represents the frequency density of PT-RS as a function of scheduled bandwidth.

**[Table 4]**

| **Scheduled bandwidth** | **Frequency density** (*K_{PT-RS}*) |
|---|---|
| N_{RB} < N_{RB0} | PT-RS is not present |
| N_{RB0} ≤ N_{RB} < N_{RB1} | 2 |
| N_{RB1} ≤ N_{RB} | 4 |

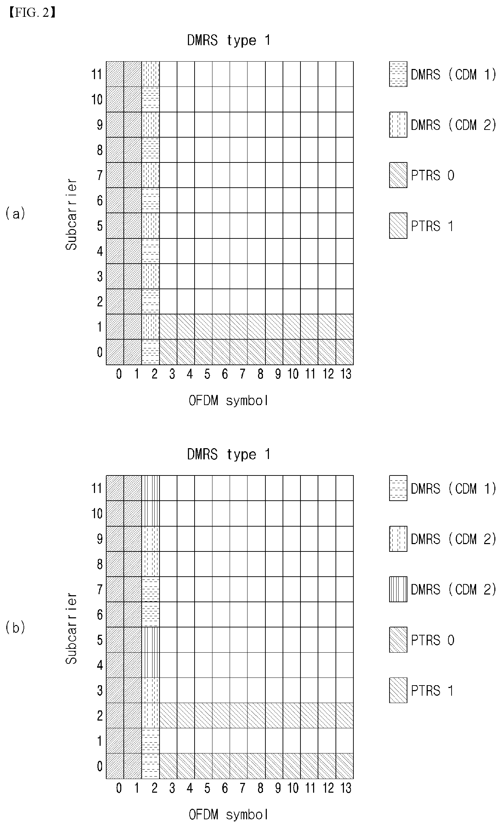

Within a PRB, a RE location of PTRS (e.g., a frequency location of a RE to which the PTRS is mapped, subcarrier index) is determined based on a location of the associated DMRS port. For example, the RE location of the PTRS is determined to be the same as one of the RE locations of the associated DMRS port. The DMRS port is transmitted from multiple REs within a PRB, but the PTRS port is transmitted from only one RE within a PRB. Based on parameter *maxNrofPorts* indicated in *PTRS-UplinkConfig,* an offset ( ${k}_{ref}^{RE}$) according to Table 5 below is applied to the location (subcarrier index) of one of the REs of the DMRS port associated with each PTRS port. Based on the RE location (subcarrier index) of the associated DMRS port and the offset as described above, the frequency location (e.g., subcarrier index) of the RE for PTRS mapping is determined. In this case, if parameter *resourceElementOffset* in *PTRS-UplinkConfig* is not configured, a column corresponding to 'offset00' in Table 5 is used as the offset. The PTRS mapping per DMRS configuration type is described below with reference to FIG. 2.

FIG. 2 illustrates mapping of PTRS ports per DMRS type according to an existing method.

Specifically, FIG. 2 illustrates mapping of 2 PTRS ports based on DMRS type 1/2 (DMRS configuration type 1/2). (a) of FIG. 2 illustrates mapping of 2 PTRS ports based on DMRS type 1 (DMRS configuration type 1), and (b) of FIG. 2 illustrates mapping of 2 PTRS ports based on DMRS type 2 (DMRS configuration type 2).

2 PTRS ports (PTRS 0, PTRS 1) may be associated with DMRS ports belonging to different DMRS CDM groups (CDM 1, CDM 2). Referring to FIG. 2(a), each PTRS port (PTRS 0 or PTRS 1) may be mapped based on a location (subcarrier index 0 or 1) of a RE to which the DMRS port belonging to the different DMRS CDM group (CDM 1 or CDM 2) is mapped. Referring to FIG. 2(b), each PTRS port (PTRS 0 or PTRS 1) may be mapped based on a location (subcarrier index 0 or 1) of a RE to which the DMRS port belonging to the different DMRS CDM group (CDM 1 or CDM 2) is mapped.

For 1 codeword (CW) DMRS type 1 of CB PUSCH case, port 1000 of DMRS CDM group 1 corresponding to a layer using PUSCH antenna ports 1000 and 1002 shares PTRS port 0. Port 1001 of DMRS CDM group 2 corresponding to a layer using PUSCH antenna ports 1001 and 1003 shares PTRS port 1.

For 1 CW DMRS type 2 of CB PUSCH case, port of DMRS CDM group 1 corresponding to the layer using PUSCH antenna ports 1000 and 1001 shares PTRS port 0, and port of DMRS CDM group 2 corresponding to the layer using PUSCH antenna ports 1002 and 1003 share PTRS port 1.

**[Table 5]**

| **DM-RS antenna port** *p̃* | ${k}_{ref}^{RE}$ | | | | | | | |
|---|---|---|---|---|---|---|---|---|
| | **DM-RS Configuration type 1** | | | | **DM-RS Configuration type 2** | | | |
| | ***resourceElementOffset*** | | | | ***resourceElementOffset*** | | | |
| | **offset00** | **offset01** | **offset10** | **offset11** | **offset00** | **offset01** | **offset10** | **offset11** |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |
| 8 | 4 | 6 | 10 | 0 | - | - | - | - |
| 9 | 6 | 8 | 0 | 2 | - | - | - | - |
| 10 | 5 | 7 | 11 | 1 | - | - | - | - |
| 11 | 7 | 9 | 1 | 3 | - | - | - | - |
| 12 | - | - | - | - | 6 | 7 | 0 | 1 |
| 13 | - | - | - | - | 7 | 0 | 1 | 6 |
| 14 | - | - | - | - | 8 | 9 | 2 | 3 |
| 15 | - | - | - | - | 9 | 2 | 3 | 8 |
| 16 | - | - | - | - | 10 | 11 | 4 | 5 |
| 17 | - | - | - | - | 11 | 4 | 5 | 10 |

In the present disclosure, a resource element (RE) location may be interpreted/replaced as a frequency location, a subcarrier, or a subcarrier index, and a resource block (RB) may be interpreted/replaced as a physical resource block (PRB).

### Method 1

A method of determining/configuring 3-port PTRS RE location is described below.

In 3-layer transmission and 3-port PTRS transmission, each DMRS port is mapped/associated with each PTRS port. In this case, the PTRS RE location (e.g., frequency location of the RE, subcarrier index) is determined based on a RE location (e.g., frequency location of the RE, subcarrier index) of the associated DMRS port.

For DMRS type 2, three DMRS CDM groups are defined. If three PTRS ports (e.g., PTRS ports 0-2) are configured, the PTRS may be mapped to each DMRS port RE location as in the legacy. In this case, a problem in that REs related to different PTRS ports overlap in the frequency domain does not occur.

For DMRS type 1, two CDM groups are defined. In this case, two PTRS ports may be mapped to the same RE by simply extending and applying the existing PTRS mapping method. Specifically, a frequency location (subcarrier index) of an RE related to a PTRS port may be the same as a frequency location (subcarrier index) of an RE related to another PTRS port. The problem of overlapping the RE locations is described in more detail.

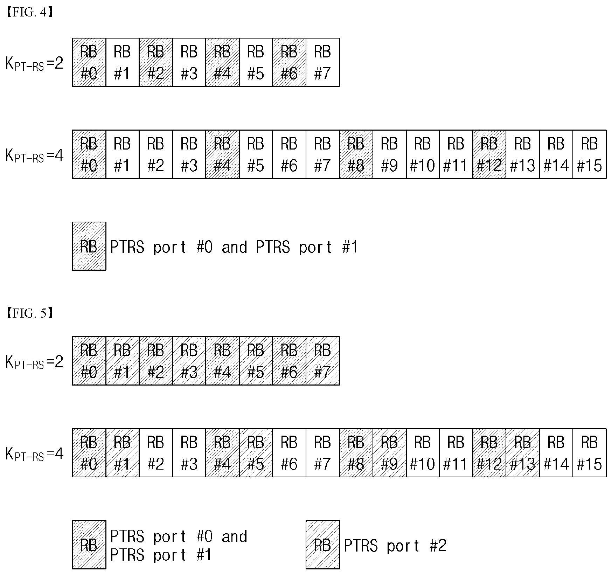

Two DMRS ports in the same CDM group among three DMRS ports are multiplexed based on a code (e.g., orthogonal cover code), and thus the two DMRS ports may be mapped to the same RE location. For example, among three PTRS ports, two PTRS ports associated with the two DMRS ports in the same CDM group may be mapped to the same RE location (subcarrier index). For example, according to the existing method, each of the two PTRS ports is defined to be associated with a DMRS port (lowest indexed DMRS port) with the lowest index among DMRS ports of each of two CDM groups. Among three PTRS ports, two PTRS ports associated with the same CDM group may be associated with a DMRS port (lowest indexed DMRS port) with the lowest index among the DMRS ports in the corresponding CDM group. In this case, the RE location (subcarrier index) associated with each of the two PTRS ports is determined to be the same value. Specifically, the RE location (subcarrier index) is determined based on i) a RE location (subcarrier index) related to the lowest indexed DMRS port and ii) an offset (e.g., ${k}_{ref}^{RE}$ in FIG. 5) related to the lowest indexed DMRS port (e.g., DMRS antenna port 0).

As described above, in the DMRS type 1, when a third PTRS port is simultaneously configured in the same DMRS CDM group as a first or second PTRS port, the REs may overlap.

To solve a problem of the RE overlap as described above, the following embodiment may be considered.

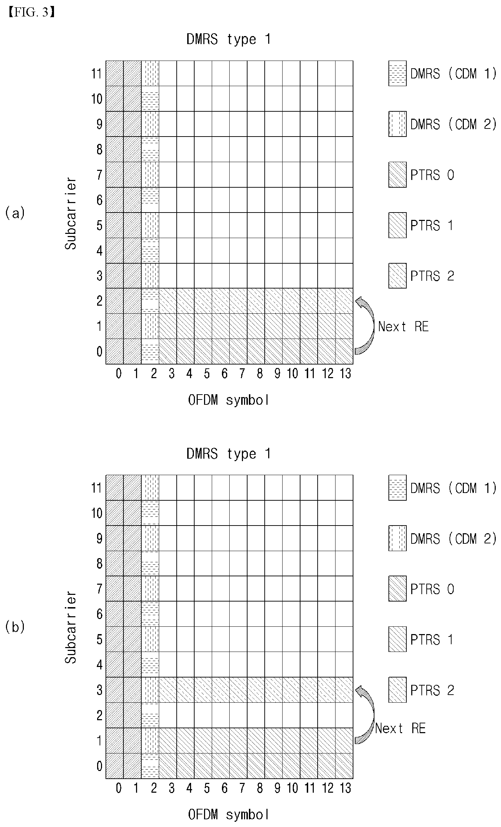

Two (e.g., first PTRS port, second PTRS port) of three PTRS ports are configured in respective CDM groups as in the legacy. For example, the 1st PTRS port is mapped based on a RE location (e.g., subcarrier index 0) of a DMRS port associated with a first PTRS port in a first CDM group. The 2nd PTRS port is mapped based on a RE location (e.g., subcarrier index 1) of a DMRS port associated with a second PTRS port in a second CDM group. The last PTRS port (e.g., 3rd PTRS port) is mapped to a next RE location of the associated DMRS port. For example, the 3rd PTRS port may be mapped based on a next RE location (e.g., subcarrier index 2 or 3) of a RE location (e.g., subcarrier index 0 or 1) of a DMRS port associated with the 3rd PTRS port in the first CDM group (or second CDM group). The present embodiment is described with reference to FIG. 3.

FIG. 3 illustrates mapping of PTRS ports according to an embodiment of the present disclosure.

Referring to FIG. 3, PTRS port 0 and PTRS port 1 may be mapped based on a subcarrier index of a RE related to a DMRS port in each CDM group according to the legacy standard. Specifically, PTRS port 0 is mapped to REs based on a first subcarrier (e.g., subcarrier index 0), and PTRS port 1 is mapped to REs based on a second subcarrier (e.g., subcarrier index 1).

Referring to (a) and (b) of FIG. 3, a third PTRS port may be associated with a DMRS port in a first CDM group (CDM 1) or a second CDM group (CDM 2). A RE location to which the third PTRS port (e.g., PTRS port 2) is mapped may be determined so as not to overlap with a RE location to which another PTRS port (e.g., PTRS port 0 or PTRS port 1) associated with the same CDM group (e.g., CDM 1 or CDM 2) is mapped.

Referring to (a) of FIG. 3, the third PTRS port (e.g., PTRS port 2) may be mapped to a different RE location (e.g., subcarrier index 2, 4, 6, 8 or 10) from the RE location (e.g., subcarrier index 0) to which the other PTRS port (e.g., PTRS port 0) is mapped based on the CDM group (CDM 1). In other words, among the RE locations (e.g., subcarrier indices 0, 2, 4, 6, 8, 10) based on the same CDM group (CDM 1), the third PTRS port (e.g., PTRS port 2) may be mapped to a second RE location (e.g., subcarrier index 2, 4, 6, 8 or 10) different from a first RE location (e.g., subcarrier index 0) to which the other PTRS port (e.g., PTRS port 0) is mapped.

Referring to (b) of FIG. 3, the third PTRS port (e.g., PTRS port 2) may be mapped to a different RE location (e.g., subcarrier index 3, 5, 7, 9 or 11) from the RE location (e.g., subcarrier index 1) to which the other PTRS port (e.g., PTRS port 1) is mapped based on the CDM group (CDM 2). In other words, among the RE locations (e.g., subcarrier indices 1, 3, 5, 7, 9, 11) based on the same CDM group (CDM 2), the third PTRS port (e.g., PTRS port 2) may be mapped to a second RE location (e.g., subcarrier index 3, 5, 7, 9 or 11) different from a first RE location (e.g., subcarrier index 1) to which the other PTRS port (e.g., PTRS port 1) is mapped.

For example, the RE location (subcarrier index) related to the third PTRS port may be determined based on an offset configured based on higher layer parameter (e.g., Table 5). Specifically, higher layer parameter resourceElementOffse in PTRS-UplinkConfig may be set to one of {offset01, offset10, offset11}. In this case, offset( ${k}_{ref}^{RE}$) is determined based on the parameter resourceElementOffset (e.g., offset01). Alternatively, if higher layer parameter resourceElementOffset in PTRS-UplinkConfig is not configured, the offset( ${k}_{ref}^{RE}$) is determined based on offset00.

The following is described based on an example where the higher layer parameter resourceElementOffset is set to offset01. 2 among values according to offset01, as a first offset value ( ${k}_{ref}^{RE}$) for determining the RE location, may be applied to the other PTRS port (e.g., PTRS port 0) associated with the same CDM group. A second offset value different from the first offset value may be applied to the third PTRS port.

For example, the second offset value may be defined/determined as a value different from the first offset value.

For example, the second offset value may be determined based on a different value (e.g., offset00, offset10 or offset11) from offset01.

For example, the second offset value may be determined based on Table 5 and other tables. The offset ( ${k}_{ref}^{RE}$) related to the 1st and 2nd PTRS ports may be determined based on offset01 and Table 5, and the offset ( ${k}_{ref}^{RE}$) related to the 3rd PTRS port may be determined based on offset01, Table 5, and other tables.

For example, information (e.g., additional PTRS RE offset value for 3rd PT-RS port) on the offset related to the 3rd PTRS port may be configured to a UE by a base station. Specifically, higher layer parameter resourceElementOffset2 may be configured. The higher layer parameter resourceElementOffset2 may be set to a different value (e.g., offset11) from the higher layer parameter resourceElementOffset (e.g., offset01). Specifically, information indicating the offset (e.g., 0-11) for the 3rd PTRS port may be configured.

### Method 2-1

A method of determining/configuring 3-port PTRS RB location is described below.

According to the legacy standard, all PTRS ports are located within the same RB. Specifically, all the PTRS ports are mapped to REs within the same RB. An RB offset related to an RB location may be configured based on RRC signaling as illustrated in FIG. 4.

FIG. 4 illustrates an RB location mapped to PTRS port according to an existing method.

Referring to FIG. 4, all PTRS ports may be mapped to the same RB based on the above-described frequency density (*K_{PT-RS}*).

According to an embodiment, three PTRS ports may be transmitted by being mapped to RE(s) within RB determined as in the legacy. In this instance, the method 1 may be utilized to resolve the problem of overlapping RE locations.

According to an embodiment, three PTRS ports may be transmitted by being mapped to RE(s) within different RBs. For example, an RB location of a 3rd PTRS port may be determined differently from RB locations of 1st and 2nd PTRS ports. According to the present embodiment, the following effects are obtained. Potential RE location conflict problem and/or problem where rate-matching RE is irregular due to PTRS REs being excessively concentrated in a specific PRB can be prevented. This is described below with referent to FIG. 5.

FIG. 5 illustrates an example of an RB location for PTRS port according to an embodiment of the present disclosure.

If *K_{PT-RS}*=2, 1st and 2nd PTRS ports (PTRS ports #0 and #1) may be transmitted by being configured/mapped to a first RB (e.g., RB#0, RB#2, RB#4, RB#6) determined based on *K*_{*PT*-*RS*}(2), and a 3rd PTRS port (PTRS port #2) may be transmitted by being configured/mapped to a second RB (e.g., RB#1, RB#3, RB#5, RB#7) located after the first RB.

If *K*_{*PT*-*RS*}=4, 1st and 2nd PTRS ports (PTRS ports #0 and #1) may be transmitted by being configured/mapped to a first RB (e.g., RB#0, RB#4, RB#8, RB#12) determined based on *K_{PT-RS}*(4), and a 3rd PTRS port (PTRS port #2) may be transmitted by being configured/mapped to a second RB (e.g., RB#1, RB#5, RB#9, RB#13) located after the first RB. In this case, there is an advantage of dispersing rate-matching.

### Method 2-2

A method of determining/configuring 3-port PTRS RB location is described below.

A method of configuring RB location/offset mapped per PTRS port may be considered.

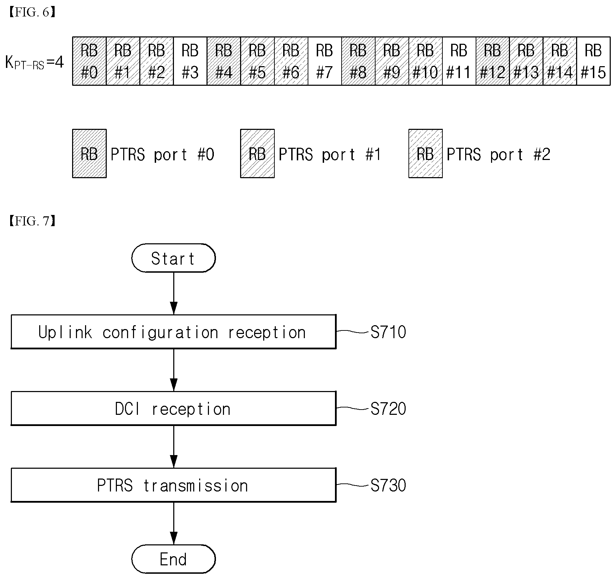

For example, a 1st PTRS port may be configured/mapped based on a specific RB (determined based on *K*_{*PT*-*RS*} as in the legacy). A 2nd PTRS port may be configured/mapped based on a next RB (2nd RB) of the specific RB (1st RB). A 3rd PTRS port may be configured/mapped based on a next RB of the 2nd RB. This can resolve the problem of overlapping RE locations (subcarriers). This is described below with reference to FIG. 6.

FIG. 6 illustrates another example of an RB location for PTRS port according to an embodiment of the present disclosure.

Specifically, FIG. 6 illustrates an RB location per PTRS port when *K*_{*PT*-*RS*}=4.

Referring to FIG. 6, a 1st PTRS port (PTRS port #0) is configured/mapped based on a first RB (e.g., RB#0, RB#4, RB#8, RB#12) determined based on *K*_{*PT*-*RS*}. A 2nd PTRS port (PTRS port #1) is configured/mapped based on a second RB (e.g., RB#1, RB#5, RB#9, RB#13) located after the first RB. A 3rd PTRS port (PTRS port #2) is configured/mapped based on a third RB (e.g., RB#2, RB#6, RB#10, RB#14) located after the second RB. The present embodiment has an advantage of dispersing rate-matching.

### Method 3

A method of configuring 2-port PTRS for a 3Tx non-coherent codebook is described below.

As in the existing 4Tx, phase noise estimation may be performed using only 2 PTRS ports in 3Tx non-coherent codebook uplink transmission. In 3Tx non-coherency transmission, 2 PTRS ports may be configured. In this case, PTRS-DMRS association may be indicated based on a 2-bit field. The 2-bit field may be interpreted based on the existing defined table. Specifically, the MSB of the 2-bit field represents one of 1st to 2nd DMRS ports sharing PTRS port 0. The LSB of the 2-bit field represents one of the 1st to 2nd DMRS ports sharing PTRS port 1.

In relation to the PTRS-DMRS association, a method of reducing DCI overhead (the number of bits in a DCI field for the PTRS-DMRS association) may be considered. For example, in the 3Tx non-coherent codebook uplink transmission, a rule may be defined such that PTRS port 0 is associated with the 1st DMRS port and PTRS port 1 is associated with the 2nd DMRS port. In this case, no separate indication/signaling for PTRS-DMRS association is required. Therefore, the number of bits in the DCI field for PTRS-DMRS association can be reduced from 2 bits to 0 bit.

If it is defined that PTRS port 0 is always associated with the 1st DMRS port and PTRS port 1 is always associated with the 2nd DMRS port, 2 PTRS ports may be configured in one DMRS CDM group or 2 PTRS ports may be configured in two DMRS CDM groups. Since the PTRS port can be associated with the DMRS port with high RSRP, phase noise estimation and DMRS performance can be efficiently secured.

The above proposals may be combined and finally applied.

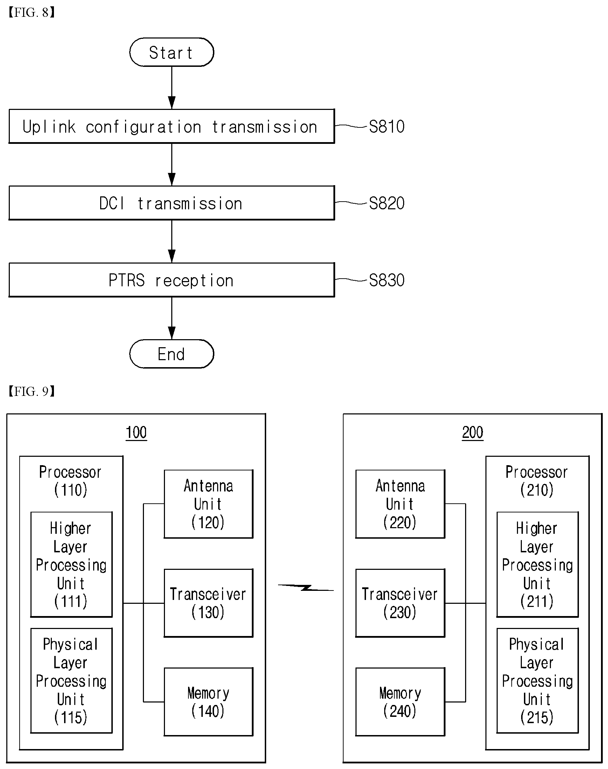

From an implementation perspective, operations of the UE/base station according to the above-described embodiments (e.g., operations based on at least one of the methods 1, 2-1, 2-2, and 3) can be processed by a device (e.g., 100 and 200) of FIG. 9 described below.

Further, the operations of the UE/base station according to the above-described embodiments (e.g., operations based on at least one of the methods 1, 2-1, 2-2, and 3) can be stored in a memory (e.g., memories 140 and 240 of FIG. 9) in the form of commands/programs (e.g., instructions, executable codes) for running at least one processor (e.g., processors 110 and 210 of FIG. 9).

Below, the above-described embodiments are described in detail from a UE/base station operation perspective with reference to FIGS. 7 and 8. Methods described below are merely distinguished for convenience of explanation. Thus, it is obvious that partial configuration of any method can be substituted or combined with partial configuration of another method.

FIG. 7 is a flowchart illustrating a method according to an embodiment of the present disclosure.

Referring to FIG. 7, a method according to an embodiment of the present disclosure comprises an uplink configuration receiving step S710, a DCI receiving step S720, and a PTRS transmitting step S730.

In the step S710, a UE receives an uplink configuration related to a phase tracking reference signal (PTRS) from a base station. For example, the uplink configuration may be based on a higher layer parameter PTRS-UplinkConfig.

For example, the uplink configuration may include at least one of i) information related to a frequency density (e.g., higher layer parameter frequencyDensity, see Table 4), ii) information related to a time density (e.g., higher layer parameter timeDensity, see Table 3), iii) information related to a resource element offset (e.g., higher layer parameter resourceElementOffset), and/or iv) information related to the maximum number of PTRS ports (e.g., higher layer parameter maxNrofPorts representing the maximum number of PTRS ports).

In the step S720, the UE receives downlink control information (DCI) for scheduling a physical uplink shared channel (PUSCH) from the base station.

For example, the DCI may be based on DCI format 0 (e.g., DCI format 0_0, DCI format 0_1, DCI format 0_2 or DCI format 0_3).

For example, the DCI may include a PTRS-DMRS association field. An association between PTRS port(s) and DMRS port(s) may be indicated based on the PTRS-DMRS association field.

In the step S730, the UE transmits, to the base station, the PTRS based on symbols allocated to the PUSCH.

For example, the PTRS is transmitted only in resource blocks used for the PUSCH. Specifically, the PTRS is mapped to resource elements within the symbols allocated for the PUSCH.

More specifically, the PTRS may be mapped to resource elements (REs) within the symbols based on i) two code division multiplexing (CDM) groups related to configuration type 1 (e.g., DMRS configuration type 1) or ii) three CDM groups related to configuration type 2 (e.g., DMRS configuration type 2). The resource elements may be related to three PTRS ports.

According to the existing method, when three PTRS ports are configured and the PTRS is mapped based on configuration type 1, resource elements related to two PTRS ports based on the same CDM group may overlap in a frequency domain. In other words, each of the resource elements related to the two PTRS ports based on the same CDM group may be based on the same subcarrier index. Embodiments for solving the problem are described in detail below.

According to an embodiment, among the resource elements, resource elements related to two PTRS ports associated with a DoModulation Reference Signal (DMRS) port in the same CDM group may be based on i) different resource element offsets and/or ii) different resource blocks. The present embodiment may be based on at least one of the Method 1, the Method 2-1 and/or the Method 2-2.

According to an embodiment, the different resource element offsets may include i) a first resource element offset and ii) a second resource element offset. The present embodiment may be based on the Method 1.

For example, the first resource element offset may be a value determined based on a first offset among offsets (e.g., offset00, offset01, offset10, offset11) defined for the configuration type 1 (see Table 5). The first offset may be i) an offset (e.g., offset01, offset10 or offset11) configured based on the configuration information or ii) a first offset (e.g., offset00) among the offsets.

Specifically, higher layer parameter resourceElementOffset may be configured based on the configuration information. The higher layer parameter resourceElementOffset may be set to offset01, offset10 or offset11. The first offset may be offset01, offset10 or offset11 based on the higher layer parameter resourceElementOffset.

Specifically, higher layer parameter resourceElementOffset may not be configured based on the configuration information. In this case, the first offset may be a first offset (e.g., offset00) among the offsets (e.g., offset00, offset01, offset10, offset11).

For example, the second resource element offset may be a value determined based on a second offset. The second offset may be one of remaining offsets (e.g., offset00, offset10, offset11) excluding the first offset (e.g., offset01) from the offsets. Specifically, the second offset may be a next offset (e.g., offset10) of the first offset (e.g., offset01) among the offsets. Specifically, the second offset may be a previous offset (e.g., offset00) of the first offset (e.g., offset01) among the offsets. Specifically, based on the first offset among the offsets being an odd-numbered offset (e.g., offset00), the second offset may be a next odd-numbered offset (e.g., offset10). Specifically, based on the first offset among the offsets being an even-numbered offset (e.g., offset01), the second offset may be a next even-numbered offset (e.g., offset11).

According to an embodiment, the different resource blocks may include i) a first resource block and ii) a second resource block. The first resource block may be determined based on a frequency density related to the PTRS. The second resource block may be a next resource block of the first resource block. The present embodiment may be based on the Method 2-1. Referring to FIG. 5 of *K*_{*PT*-*RS*}=2, the first resource block may include RB#0, RB#2, RB#4, and RB#6 determined based on a frequency density (*K*_{*PT*-*RS*}). The second resource block may include RB#1, RB#3, RB#5, and RB#7, which are next resource blocks of the first resource block.

According to an embodiment, the different resource blocks may include resource blocks respectively related to the three PTRS ports. The present embodiment may be based on the Method 2-2.

For example, the different resource blocks may include i) a first resource block related to a first PTRS port, ii) a second resource block related to a second PTRS port, and iii) a third resource block related to a third PTRS port.

For example, the first resource block may be determined based on a frequency density related to the PTRS. The second resource block may be a next resource block of the first resource block. The third resource block may be a next resource block of the second resource block. Referring to FIG. 6, the first resource block may include RB#0, RB#4, RB#8, and RB#12 determined based on the frequency density (*K*_{*PT*-*RS*}). The second resource block may include RB#1, RB#5, RB#9, and RB#13, which are the next resource blocks of the first resource block. The third resource block may include RB#2, RB#6, RB#10, and RB#14, which are the next resource blocks of the second resource block.

According to an embodiment, a DMRS port associated with each PTRS port may be defined. In this case, no separate signaling is required to indicate the PTRS-DMRS association. Specifically, the number of bits in a PTRS-DMRS association field within the DCI may be 0. The present embodiment may be based on the Method 3. For example, the first PTRS port may be associated with a first DMRS port (e.g., a lowest indexed DMRS port in a first CDM group). The second PTRS port may be associated with a second DMRS port (e.g., a lowest indexed DMRS port in a second CDM group). The third PTRS port may be associated with the first DMRS port or the second DMRS port.

According to an embodiment, the PUSCH may be related to codebook based uplink (UL) transmission based on three antenna ports.

The operations based on the steps S710 to S730 described above may be implemented by a device of FIG. 9. For example, a UE 200 may control one or more transceivers 230 and/or one or more memories 240 so as to perform the operations based on the steps S710 to S730.

Below, the above-described embodiments are described in detail from a perspective of base station operation.

Steps S810 to S830 described below correspond to the steps S710 to S730 described with reference to FIG. 7. Considering the above correspondence, redundant description is omitted. That is, the detailed description of the base station operation described below can be replaced with the description/embodiment of FIG. 7 corresponding to the base station operation. For example, the description/embodiment of the steps S710 to S730 of FIG. 7 may be additionally applied to the base station operation of the steps S810 to S830 described below.

FIG. 8 is a flowchart illustrating a method according to another embodiment of the present disclosure.

Referring to FIG. 8, a method according to another embodiment of the present disclosure comprises an uplink configuration transmitting step S810, a DCI transmitting step S820, and a PTRS receiving step S830.

In the step S810, a base station transmits an uplink configuration related to a phase tracking reference signal (PTRS) to a UE.

In the step S820, the base station transmits downlink control information (DCI) for scheduling a physical uplink shared channel (PUSCH) to the UE.

In the step S830, the base station receives, from the UE, the PTRS based on symbols allocated to the PUSCH.

According to an embodiment, the PTRS may be mapped to resource elements (REs) within the symbols based on two code division multiplexing (CDM) groups related to configuration type 1.

The resource elements may be related to three PTRS ports.

Among the resource elements, resource elements related to two PTRS ports associated with a DoModulation Reference Signal (DMRS) port in the same CDM group may be based on i) different resource element offsets and/or ii) different resource blocks.

The operations based on the steps S810 to S830 described above may be implemented by a device of FIG. 9. For example, a base station 100 may control one or more transceivers 130 and/or one or more memories 140 so as to perform the operations based on the steps S810 to S830.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system). For example, PRACH, PUSCH, PUCCH, or SRS may be replaced/changed to an uplink signal (or uplink channel). For example, SSB, CSI-RS, PDSCH, or PDCCH may be replaced/changed to a downlink signal (or downlink channel).

A device to which an embodiment of the present disclosure is applicable (a device implementing the method/operation according to an embodiment of the present disclosure) is described below with reference to FIG. 9.

FIG. 9 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method comprising:
receiving, from a base station, an uplink configuration related to a phase tracking reference signal (PTRS);
receiving, from the base station, downlink control information (DCI) for scheduling a physical uplink shared channel (PUSCH); and
transmitting, to the base station, the PTRS based on symbols allocated to the PUSCH,
wherein the PTRS is mapped to resource elements (REs) within the symbols based on two code division multiplexing (CDM) groups related to configuration type 1,
wherein the resource elements are related to three PTRS ports,
wherein resource elements related to two PTRS ports associated with a DoModulation Reference Signal (DMRS) port in the same CDM group among the resource elements are based on i) different resource element offsets and/or ii) different resource blocks.

2. The method of claim 1, wherein the different resource element offsets include i) a first resource element offset and ii) a second resource element offset.

3. The method of claim 2, wherein the first resource element offset is a value determined based on a first offset among offsets defined for the configuration type 1, and
wherein the first offset is i) an offset configured based on the configuration information or ii) a first offset among the offsets.

4. The method of claim 3, wherein the second resource element offset is a value determined based on a second offset, and
wherein the second offset is one of remaining offsets excluding the first offset from the offsets.

5. The method of claim 4, wherein the second offset is a next offset of the first offset among the offsets.

6. The method of claim 1, wherein the different resource blocks include i) a first resource block and ii) a second resource block,
wherein the first resource block is determined based on a frequency density related to the PTRS, and
wherein the second resource block is a next resource block of the first resource block.

7. The method of claim 1, wherein the different resource blocks include resource blocks respectively related to the three PTRS ports.

8. The method of claim 7, wherein the different resource blocks include i) a first resource block related to a first PTRS port, ii) a second resource block related to a second PTRS port, and iii) a third resource block related to a third PTRS port.

9. The method of claim 8, wherein the first resource block is determined based on a frequency density related to the PTRS,
wherein the second resource block is a next resource block of the first resource block, and
wherein the third resource block is a next resource block of the second resource block.

10. The method of claim 1, wherein a DMRS port associated with each PTRS port is defined, and
wherein a number of bits in a PTRS-DMRS association field within the DCI is 0.

11. The method of claim 1, wherein the PUSCH is related to codebook based uplink (UL) transmission based on three antenna ports.

12. A user equipment comprising:
one or more transceivers;
one or more processors; and
one or more memories connected to the one or more processors and storing instructions,
wherein the instructions, based on being executed by the one or more processors, allow the user equipment to perform all steps of the method according to any one of claims 1 to 11.

13. A device comprising one or more memories and one or more processors operably connected to the one or more memories,
wherein the one or more memories store instructions, based on being executed by the one or more processors, which allow the device to perform all steps of the method according to any one of claims 1 to 11.

14. A non-transitory computer-readable medium storing instructions,
wherein the instructions, based on being executed by one or more processors allow a user equipment to perform all steps of the method according to any one of claims 1 to 11.

15. A method comprising:
transmitting, to a user equipment (UE), an uplink configuration related to a phase tracking reference signal (PTRS);
transmitting, to the UE, downlink control information (DCI) for scheduling a physical uplink shared channel (PUSCH); and
receiving, from the UE, the PTRS based on symbols allocated to the PUSCH,
wherein the PTRS is mapped to resource elements (REs) within the symbols based on two code division multiplexing (CDM) groups related to configuration type 1,
wherein the resource elements are related to three PTRS ports,
wherein resource elements related to two PTRS ports associated with a DoModulation Reference Signal (DMRS) port in the same CDM group among the resource elements are based on i) different resource element offsets and/or ii) different resource blocks.

16. A base station comprising:
one or more transceivers;
one or more processors; and
one or more memories connected to the one or more processors and storing instructions,
wherein the instructions, based on being executed by the one or more processors, allow the base station to perform all steps of the method according to claim 15.
